# EUROPEAN PATENT SPECIFICATION

(11) **EP 2 754 891 B1**
(45) Date of publication and mention of the grant of the patent: **17.05.2017**
(21) Application number: 13151143.8
(22) Date of filing: 14.01.2013
(51) Int. Cl.: F03D 80/40

(54) **Wind turbine rotor blade de-icing arrangement**
Enteisungsanordnung eines Windturbinenblattes
Système de dégivrage de pale de rotor d'éolienne

(43) Date of publication of application: 16.07.2014
(73) Proprietor: Siemens Aktiengesellschaft, 80333 München (DE)
(72) Inventor: Madsen, Finn Daugaard, 7190 Billund (DK); Westergaard, Martin, 9000 Aalborg (DK)

(56) References cited:
- EP-A1- 0 680 878
- WO-A1-98/53200
- WO-A1-2011/087414
- WO-A1-2011/096851
- WO-A1-2011/127995
- DE-A1-102004 042 423
- GB-A- 2 477 338

## Description

The invention describes a de-icing arrangement of a wind turbine rotor blade, a wind turbine, and a method of incorporating a de-icing arrangement in a wind turbine rotor blade.

During cold conditions, ice can build up on the rotor blades of a wind turbine. Such ice deposits or layers can have a detrimental effect on the performance of the wind turbine, since they alter the aerodynamic properties of the blade. The accumulated weight of the ice on the rotor blades can also result in unwanted loading of the wind turbine. Therefore, some effort is invested in avoiding the build-up of ice, or to melt ice deposits that have already formed on the rotor blades. In one approach, a mat of electrically conductive fibres (e.g. carbon fibres) is applied to the exterior of a previously manufactured and finished rotor blade. When the poles of a current supply are connected to opposite ends of the mat, the current flowing through the mat heats the fibres and prevents ice from building up, or causes an existing ice layer to melt and slide off. Other solutions involve embedding conductive fibres inside the blade body. For example, DE 10 2004 042423 A1 discloses an arrangement in which a conductive mat makes electrical contact to a lead on the interior of the blade. WO 98/53200 A1 discloses a way of embedding heater elements, connected by wire or ribbon to an electric source, into a rotor blade.

A problem associated with the known approaches is that it is difficult to form a reliable electrical connection between the fibre mat and the poles of the current supply. Known connecting means may fail sooner or later as a result of unavoidable dynamic influences such as blade vibration, extreme temperature differences, material deterioration owing to sunlight, corrosion due to high humidity, etc., for example when the de-icing mat is mounted onto the exterior of the blade and is therefore exposed to all weather conditions. Furthermore, for a mat arranged on the outer surface of the blade, any metal components used to connect it to the current supply may act as attractors, and a flashover may occur from a lightning protection means to such a metal component during a lightning strike, or the metal component itself may be struck by lightning. As a result, the known approaches are also vulnerable to damage during a lightning strike.

It is therefore an object of the invention to provide a more reliable way of dealing with ice deposits on a wind turbine rotor blade.

This object is achieved by the de-icing arrangement of claim 1; by the wind turbine of claim 9, and by the method of claim 10 of incorporating a de-icing arrangement in a wind turbine rotor blade.

According to the invention, a de-icing arrangement of a wind turbine rotor blade comprises an electrically conductive mat; an electrically conductive band for distributing an electric current along a first edge of the mat; and a current supply connector for connecting the band to a current supply; wherein at least the electrically conductive mat is embedded in the body of the rotor blade, and wherein the de-icing arrangement comprises a pressure connection formed between the conductive band and the conductive mat, and is characterized in that the mat comprises an arrangement of electrically and thermally conductive fibres, and an arrangement of thermally conductive raised elements applied to the fibres.

A wind turbine rotor blade is usually made of fibreglass, and is usually moulded by arranging a "layup" of fibreglass mats about a core, spindle or other inner form, enclosing the entire layup in a mould, and performing vacuum extraction to draw a liquid resin through the fibreglass layers. Numerous variations to this process are known, and need not be elaborated upon here. Therefore, without restricting the invention in any way, it may be assumed herein that the rotor blade is made of fibreglass and moulded using an appropriate technique. The resin that is used to permeate the fibreglass also ensures a smooth outer surface. In the de-icing arrangement according to the invention, therefore, at least the electrically conductive mat is embedded in the body of the blade so that it is covered by resin. Of course, the de-icing arrangement can be incorporated in the body of the rotor blade so that it is also covered by a fibreglass layer in addition to a resin covering layer. An advantage of the de-icing arrangement according to the invention is that the vulnerable conductive mat is well protected from detrimental exterior influences such as humidity, extreme temperatures, ultraviolet radiation, etc., but is still highly effective. Furthermore, since resin is an effective electrical insulator, the likelihood of damage to the de-icing arrangement during a lightning storm is significantly reduced, as is the likelihood of a flashover from an attractor of a lightning protection system.

As indicated above, the mat is preferably embedded in the rotor blade body, close to the outer surface, so that heat can be effectively transferred to the rotor blade surface. To increase the effectiveness of the heat transfer, the mat is realised to comprise an arrangement of raised "bumps". For example, a slub fibre could be used to weave the mat. Alternatively, low "bumps" could be manually applied to the mat using a thermally and electrically conductive material such as solder. Such slubs or bumps can increase the effectiveness of the heat transfer to the surface at such points, since any fibreglass layer and/or resin coating will be thinnest above those raised elements. The height of the slubs or bumps is preferably chosen so that the rotor blade can still be formed to have a smooth outer surface, i.e. a slub or bump does not result in a noticeable irregularity on the rotor blade surface.

According to the invention, a wind turbine comprises a number of such rotor blades (usually three), and a current supply for connecting to the de-icing arrangements of the rotor blades.

An advantage of the wind turbine according to the invention is that with relatively little effort, the build-up of ice on the rotor blades can be avoided, so that the energy output of the wind turbine can be maintained even during very cold conditions. The lifetime of the rotor blades can also be extended, since the likelihood of cracking or other damage owing to ice deposits can be minimized.

According to the invention, the method of incorporating a deicing arrangement in a wind turbine rotor blade comprises the steps of arranging an electrically conductive mat on a rotor blade layup, which mat comprises an arrangement of electrically and thermally conductive fibres and an arrangement of thermally conductive raised elements applied to the fibres; arranging an electrically conductive band along a first edge of the mat; arranging a current supply connector in the rotor blade layup, which current supply connector is realised to connect the band to a current supply; embedding at least the electrically conductive mat in the body of the rotor blade; and forming a pressure connection between the conductive band and the conductive mat.

An advantage of the method according to the invention is that the cost of manufacture of the rotor blade can be kept relatively low, since the de-icing arrangement can simply be incorporated with relatively little effort in the usual manufacturing procedure.

Particularly advantageous embodiments and features of the invention are given by the dependent claims, as revealed in the following description. Features of different claim categories may be combined as appropriate to give further embodiments not described herein.

The electrically conductive mat can be realised in any suitable manner, using any arrangement of electrically conductive fibres or wires that can dissipate heat when an electrical current passes through. For example, a mat can be formed by spot-welding thin and narrow strips of metal to give a lattice structure. However, a preferred material may be carbon fibre, since carbon fibre mats are readily available and can be made as a favourably thin layer suitable for embedding in a rotor blade in a vacuum extraction moulding procedure. Therefore, without restricting the invention in any way, it may be assumed in the following, that the electrically conductive mat essentially comprises a carbon fibre mat. It may also be assumed that the rotor blade is formed in a vacuum extraction moulding procedure, although other methods of construction are not to be ruled out.

As mentioned above, in the de-icing arrangement according to the invention, the conductive mat is entirely embedded underneath the outer surface of the rotor blade, for example under a resin outer "skin" or even underneath a thin layer of fibreglass. In a further preferred embodiment of the invention, the electrically conductive band and the current supply connector are also embedded in the material of the rotor blade. In this way, the likelihood of a bolt of lightning being attracted to any component of the de-icing arrangement is minimized. In another preferred embodiment of the invention, any components of the de-icing arrangement in the interior of the blade (e.g. conductive leads, ends of fasteners, etc.) can also be covered with an insulating material. In this way, a flashover from a lightning conductor (arranged in the interior of the blade) to any component of the de-icing arrangement can effectively be prevented.

During operation of the wind turbine, the leading edges of the rotor blades pass through very cold, moisture-laden air. Therefore, in a preferred embodiment of the invention, the conductive mat is arranged on both sides of a leading edge of the rotor blade. The effectiveness of the de-icing arrangement is greatest at that part of the blade, since ice tends to form primarily on the leading edge.

Ice is more likely to build up at regions further out along the rotor blade. Therefore, in a preferred embodiment of the invention, the conductive mat extends over at least 90% of the length of the rotor blade, so that the de-icing arrangement effectively extends to the tip of the blade

When current flows through the material of the conductive mat, heat is dissipated, since the fibres of the mat present a relatively high electrical resistance. In a particularly preferred embodiment of the invention, therefore, the conductive mat is embedded to a depth of at most 5.0 mm beneath an outer surface of the rotor blade, so that the conductive mat is favourably close to the surface of the rotor blade. In this way, a very effective heat transfer to the blade outer surface is ensured.

The current supply connector can be connected in any suitable way to the current supply. In a preferred embodiment of the invention, the current supply connector comprises an exterior connector part and an interior connector part, and these are preferably realised to be securely fastened together such that an electrical connection is made between the band, the mat and an electrical lead to the current supply. The interior connector part can be arranged in the interior of the blade so that it can be connected to an electrical lead on the interior of the rotor blade. These elements could be welded together. However, in a particularly preferred embodiment of the invention, the current supply connector and the interior connector part form a pressure connection with the electrical lead. This type of connection is robust and does not require the use of metals that can be welded.

Preferably, the interior connector part comprises an aluminium body, or a body formed of an aluminium alloy. Such a material has a favourable conductivity, but is malleable enough to form a favourable pressure connection with an electrical lead. A bushing can be formed in the interior connector part, and a threaded bolt (of steel or aluminium) can be screwed into the bushing. The malleable material ensures a tight threaded connection that is unlikely to become loose over time.

The current source can be a battery or generator for supplying a suitable level of current. The current source can supply direct or alternating current, as appropriate.

The electrical resistance of a mat made of a fibre such as carbon fibre is quite high, and an electrical current will always seek the path of least resistance (i.e. the most direct path to the opposite electrical pole). Therefore, in a particularly preferred embodiment of the invention, a conductive band is arranged along one edge of the conductive mat, and a pressure connection is formed between the conductive band and the conductive mat. For example, threaded fasteners can be screwed from the outside through the band, mat and rotor blade body and into a suitable counterpart, so that the band and mat are pressed together. In this way, any current flowing through the band will be essentially evenly spread along the band, and therefore the electrical potential in the mat will be essentially the same for all points along that edge of the mat.

To ensure a favourable pressure connection, a preferred embodiment of the invention comprises the step of arranging a counterpart to the electrically conductive band so that a fastener such as a wood screw can be simply screwed through the various layers. For example, a strip of plywood can be used as a counterpart. Plywood can easily be bent into shape, so that such a pressure connection can be made with relatively little effort.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 is a schematic diagram of a rotor blade with a de-icing arrangement according to an embodiment of the invention;
Fig. 2 shows a detail of the de-icing arrangement of Fig. 1;
Fig. 3 shows a first embodiment of an electrical connection between the conductive mat, the conductive band and the current supply connector of the de-icing arrangement of Fig. 2;
Fig. 4 shows a second embodiment of an electrical connection between the conductive mat, the conductive band and the current supply connector of the de-icing arrangement of Fig. 2;
Fig. 5 shows a cut-away view of a rotor blade with an embodiment of a de-icing arrangement;
Fig. 6 shows a cross-section through the rotor blade of Fig. 5;
Fig. 7 shows a schematic rendering of an embodiment of a wind turbine according to the invention.

In the diagrams, like numbers refer to like objects throughout. Objects in the diagrams are not necessarily drawn to scale.

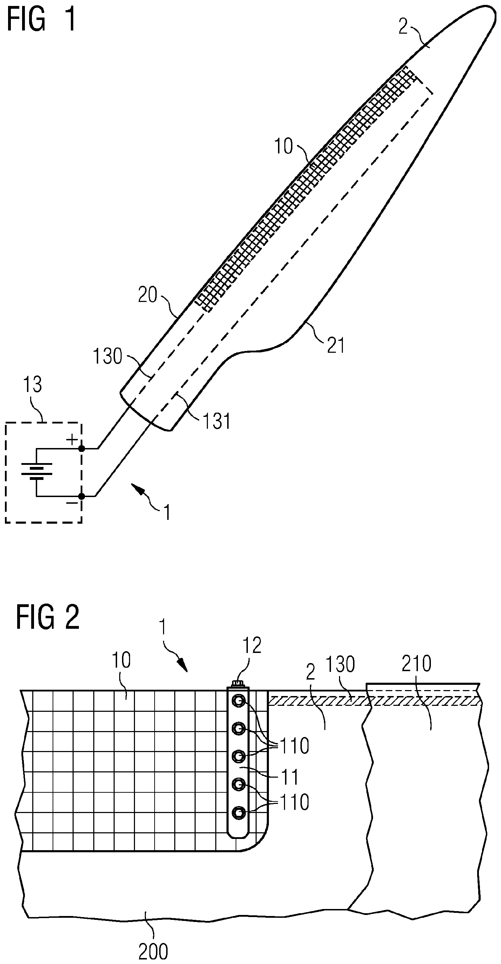

Fig. 1 is a schematic diagram of a rotor blade 2 with a de-icing arrangement 1 according to an embodiment of the invention. The rotor blade 2 has a rounded leading edge 20 and a flat, relatively thin trailing edge 21. The diagram shows an electrically conductive mat 10 embedded in the blade and covered by an outer resin "skin". The entire de-icing arrangement is embedded in this way, so that none of its components is exposed to the elements. The diagram also shows a current supply 13, represented by a battery whose two poles are connected to opposite ends of the mat 10 by means of leads 130, 131 running inside the body of the blade 2, as indicated by the broken lines. The de-icing arrangement 1 is embedded in the blade 2 so that the mat 10 lies along the leading edge 20.

Fig. 2 is a cut-away diagram showing a detail of the de-icing arrangement 1 of the previous diagram. A connector 12 passes through a conductive band 11, the conductive mat 10, and fibreglass layer 200 of the rotor blade 2. As will be explained in more detail below, the connector 12 makes an electrical connection between the current supply lead 130 (in the interior of the blade 2, indicated by the broken line) and the conductive mat 10. The connector 12 effectively presses the conductive band 11 to the mat 10 at a point within the connector 12. The conductive band 11 is, in turn, pressed firmly to the mat 10 by a series of fasteners 110 at several other points along the conductive band 11, so that any current passing into the conductive band 11 (via the current supply lead 130 and the connector 12) is distributed essentially evenly along the outer edge of the conductive mat 10. At least the mat 10 and band 11 will be covered by a resin layer 210 after the blade manufacturing process is complete. Of course, the connector 12 and fasteners 110 may also be covered by the resin layer 210. Their dimensions are exaggerated in the diagram only to clearly indicate their positions.

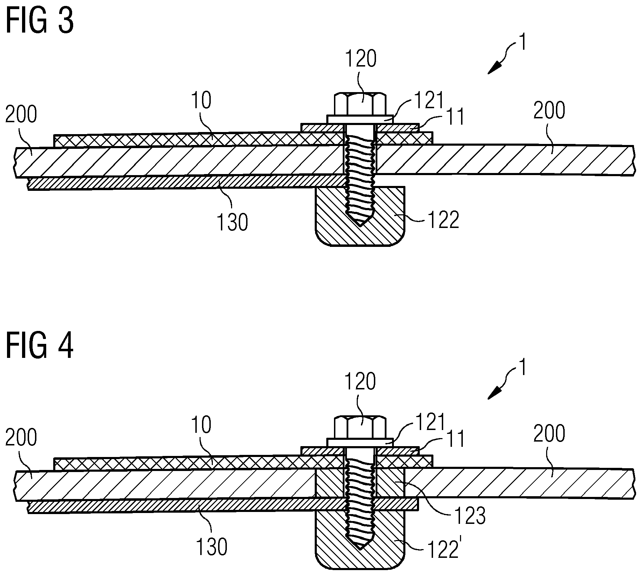

Fig. 3 shows a first embodiment of an electrical connection between the conductive mat 10, the conductive band 11 and the current supply lead 130of the de-icing arrangement of Fig. 2. Here, the connector comprises a bolt 120 with a shaft that passes through the conductive band 11, the conductive mat 10, and the fibreglass body 200 of the blade and is secured in a threaded nut 122 in the interior of the blade. The current supply lead 130 is pressed between the blade body 200 and the nut 122, so that an electrical path for the current is given through the nut 122 and bolt 120 and into the mat 10 and band 11. A washer 121 between band 11 and mat 10 further improves the current distribution. A tight connection between nut 122 and bolt 120 ensures a reliable electrical connection between the components. The bolt 120, washer 121, band 11, and nut 122 can all be made of a suitable electrically conductive material that is also resistant to corrosion, such as aluminium or an aluminium alloy.

Fig. 4 shows a second embodiment of an electrical connection between the conductive mat 10, the conductive band 11 and the current supply lead 130 of the de-icing arrangement 1 of Fig. 2. Here, the connector comprises an intermediate component 123 shaped to provide a hard and conductive body against which the current supply lead 130 can be pressed. Here also, a bolt shaft passes through the conductive band 11 and the conductive mat 10, and is secured in a threaded nut 122'. The current supply lead 130 is therefore pressed between the intermediate component 123 and the nut 122, so that a better path is provided for electrical current, since the intermediate component 123 can withstand deformation better than the fibreglass 200 of the rotor blade. The intermediate component 123 can also be made of aluminium, an aluminium alloy, or any other suitable conductive metal.

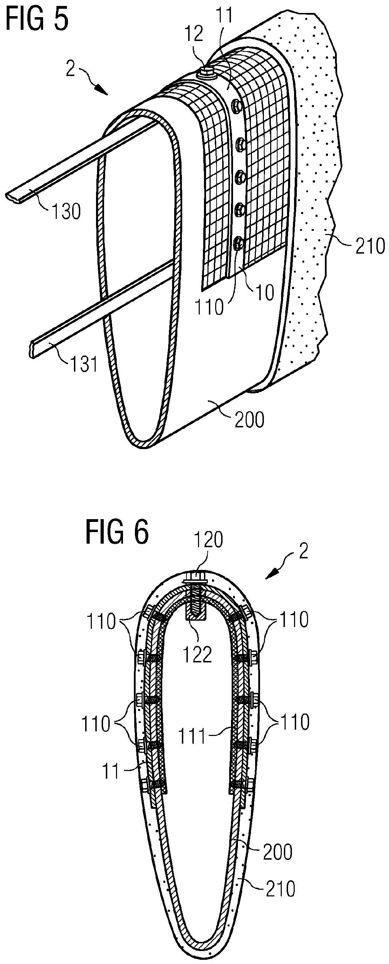

Fig. 5 shows a cut-away view of part of a rotor blade, showing parts of the de-icing arrangement embedded in the rotor blade 2 underneath an outer resin layer 210. The diagram shows the conductive mat 10 arranged to lie over the leading edge of the rotor blade, and indicates the two current supply leads 130, 131 that are arranged in the interior of the blade. These can be flat bands 130, 131 of a conductive material, for example a woven copper strip. Preferably, the current supply leads 130, 131 are covered by an insulating layer to avoid any flashover from a component of a lightning protection system. For example, the current supply leads 130, 131 could also be embedded underneath a resin layer during the moulding process, or can be enclosed in a suitable plastic or other insulating layer. The conductive band 11 is arranged along the edge of the mat 10 that is to be connected to the positive pole of the voltage source by means of a first current supply lead 130. A second connector can make an electrical connection between the opposite end of the mat 10 and the other current supply lead 131, which is connected to the negative pole of the voltage source. A second conductive band 11 could be arranged along that opposite end of the mat 10, but this is not strictly necessary.

Fig. 6 shows a cross-section through the rotor blade 2, showing how the conductive band 11 might be pressed to the mat 10 at several points. In this embodiment, a flexible piece of wood such as a plywood strip 111 is arranged on the interior of the rotor blade 2 to correspond with the position of the conductive band 11 on the exterior. Threaded wood screws 110 are passed through the conductive band 11 and mat 10 and into the wood counterpart 111, and are tightened sufficiently to press the band 11 and mat 10 together, giving an effective current path.

Instead of using a nut 122 and plywood strip 111 as shown here to secure the bolt 120 and fasteners 110 in place, a custom-made wedge or horseshoe-shaped conductive element could be formed. This might be shaped to fit into the interior of the rotor blade in the region of the leading edge and extending to correspond to the length of the band 11. Such a conductive element might have a bushing so that the bolt 120 can be screwed into it, and further bushings for bolts (instead of wood screws). Equally, the material of the conductive element could be soft enough (e.g. aluminium) so that wood screws 110 can be screwed in directly.

The preparatory steps of arranging the mat 10 on the fibreglass layup 200, securing the band 11 in place using woodscrews 111, arranging the supply leads on the interior of the layup 200, and electrically connecting the supply leads 130 to the mat 10 can all be carried out prior to a vacuum extraction process. Once all these steps have been performed, vacuum extraction can be carried out, resulting in the components 10, 11, 12, 110 of the de-icing arrangement being covered by a coating of resin 210. Alternatively, the de-icing arrangement could be applied to a fibreglass body of a partially finished blade, and a final resin coating could be manually applied to cover the mat 10 and any connectors 12, fasteners 110 and bands 11.

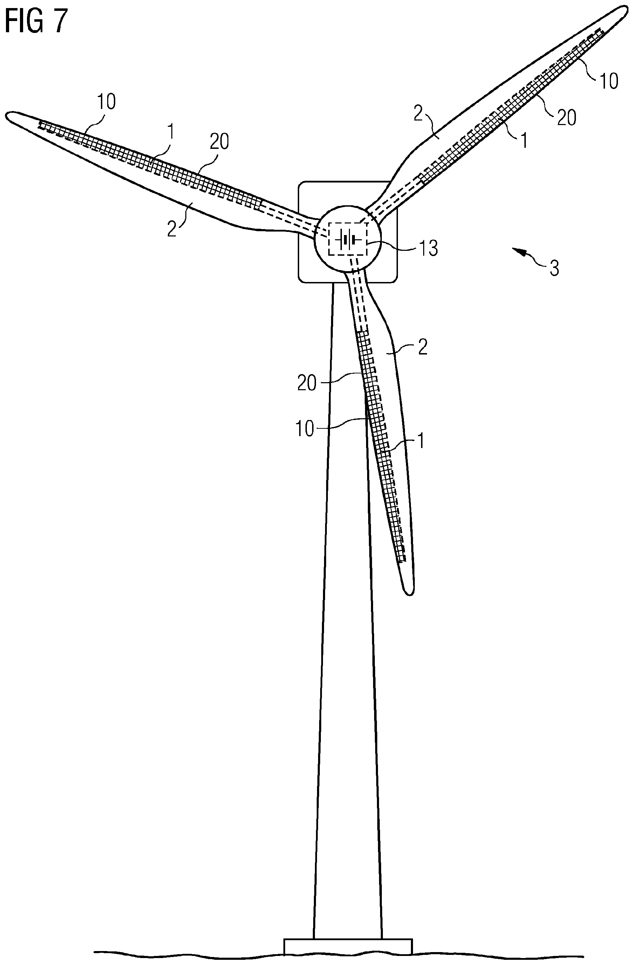

Fig. 7 shows a schematic rendering of an embodiment of a wind turbine 3 according to the invention, with three rotor blades 2, each with a de-icing arrangement 1 connected to a current supply 13. The current supply 13 can be realised in any suitable manner in the wind turbine 3, for example as a battery previously charged using superfluous energy. During very cold conditions, the heat dissipated in the mats 10 of the de-icing arrangement 1 can prevent the build up of ice on the rotor blades 2, particularly along the leading edges 20 of the blades 2, and/or can thaw any ice deposits that may have formed.

Although the present invention has been disclosed in the form of preferred embodiments and variations thereon, it will be understood that numerous additional modifications and variations could be made thereto without departing from the scope of the invention. For example, instead of using a single wide mat arranged about the leading edge and extending onto opposite sides of the rotor blade, three or more mats could be arranged in a parallel manner, separated by a certain distance and connected electrically using the conductive band. The heat dissipated by each mat can be sufficient to ensure that no ice can build up on the rotor blade in the region between mats. In this way, a more economical de-icing arrangement can be realised.

For the sake of clarity, it is to be understood that the use of "a" or "an" throughout this application does not exclude a plurality, and "comprising" does not exclude other steps or elements.

## Claims

1. A de-icing arrangement (1) of a wind turbine rotor blade (2), which de-icing arrangement (1) comprises
- an electrically conductive mat (10);
- an electrically conductive band (11) for distributing an electric current along a first edge of the mat (10);
- a current supply connector (12) for connecting the band (11) to a current supply (13);
wherein at least the electrically conductive mat (10) is embedded in the body of the rotor blade (2);
and wherein the de-icing arrangement (1) comprises a pressure connection formed between the conductive band (11) and the conductive mat (10);
and is **characterized in that**
the mat (10) comprises an arrangement of electrically and thermally conductive fibres, and an arrangement of thermally conductive raised elements applied to the electrically conductive fibres, said raised elements are formed as bumps applied to the mat, above which any fibreglass layer and/or resin coating is thinnest.

2. A de-icing arrangement according to claim 1, wherein the electrically conductive band (11) and the current supply connector (12) are at least partially embedded in the material of the rotor blade (2).

3. A de-icing arrangement according to claim 1 or claim 2, wherein the conductive mat (10) is arranged on both sides of a leading edge (20) of the rotor blade (2).

4. A de-icing arrangement according to any of the preceding claims, wherein the conductive mat (10) extends over at least 90% of the length of the rotor blade (2).

5. A de-icing arrangement according to any of the preceding claims, wherein the conductive mat (10) is embedded to a depth of at most 5.0 mm beneath an outer surface of the rotor blade (2).

6. A de-icing arrangement according to any of the preceding claims, wherein the current supply connector (12) comprises an interior connector part (122, 122', 123) for connecting to an electrical lead (130, 131) on the interior of the rotor blade (2).

7. A de-icing arrangement according to any of the preceding claims, wherein the current supply connector (12) comprises an exterior connector part (120) for connecting the electrically conductive band (11) to the interior connector part (122, 122', 123).

8. A de-icing arrangement according to claim 6 or claim 7, wherein the interior connector part (122, 122', 123) comprises an aluminium body (122, 122', 123).

9. A wind turbine (3) comprising a number of rotor blades (2) with a de-icing arrangement (1) according to any of claims 1 to 8, and a current supply (13) for connecting to the deicing arrangements (1) of the rotor blades (2).

10. A method of incorporating a de-icing arrangement (1) in a wind turbine rotor blade (2), which method comprises the steps of
- arranging an electrically conductive mat (10) on a rotor blade layup (200), which mat (10) comprises an arrangement of electrically and thermally conductive fibres and an arrangement of thermally conductive raised elements applied to the electrically conductive fibres, said raised elements being formed as bumps applied to the mat, resulting in any fibreglass layer and/or resin coating being thinnest above said bumps;
- arranging an electrically conductive band (11) along an edge of the mat (10);
- arranging a current supply connector (130, 131) within the rotor blade layup (200), which current supply connector (130, 131) is realised to connect the band (11) to a current supply (13);
- embedding at least the electrically conductive mat (10) in the body of the rotor blade (2);
- forming a pressure connection between the conductive band (11) and the conductive mat (10).

11. A method according to claim 10, comprising the step of forming a pressure connection at a plurality of points between the conductive band (11) and the conductive mat (10).

12. A method according to claim 11, comprising the step of arranging a counterpart (111) to the electrically conductive band (11) to accommodate a number of fasteners (110) forming the pressure connection between the conductive band (11) and the conductive mat (10).

## Patentansprüche

1. Enteisungsanordnung (1) für ein Windturbinenrotorblatt (2), die Folgendes umfasst:
- eine elektrisch leitende Matte (10),
- einen elektrisch leitenden Streifen (11) zum Verteilen von elektrischem Strom entlang eines ersten Rands der Matte (10),
- einen Stromversorgungsanschluss (12) zum Anschließen des Streifens (11) an eine Stromversorgung (13),
wobei zumindest die elektrisch leitende Matte (10) in den Körper des Rotorblatts (2) eingebettet ist,
und wobei die Enteisungsanordnung (1) eine Druckverbindung umfasst, die zwischen dem leitenden Streifen (11) und der leitenden Matte (10) gebildet ist,
und **dadurch gekennzeichnet ist, dass**
die Matte (10) eine Anordnung aus elektrisch und thermisch leitenden Fasern und eine Anordnung aus auf die elektrisch leitenden Fasern aufgebrachten, thermisch leitenden, erhöhten Elementen umfasst, wobei die erhöhten Elemente als auf die Matte aufgebrachte Buckel ausgebildet sind, über denen eine Glasfaserschicht und/oder eine Harzbeschichtung am dünnsten ist.

2. Enteisungsanordnung nach Anspruch 1, wobei der elektrisch leitende Streifen (11) und der Stromversorgungsanschluss (12) zumindest teilweise in das Material des Rotorblatts (2) eingebettet sind.

3. Enteisungsanordnung nach Anspruch 1 oder 2, wobei die leitende Matte (10) auf beiden Seiten einer vorderen Kante (20) des Rotorblatts (2) angeordnet ist.

4. Enteisungsanordnung nach einem der vorhergehenden Ansprüche, wobei sich die leitende Matte (10) über mindestens 90% der Länge des Rotorblatts (2) erstreckt.

5. Enteisungsanordnung nach einem der vorhergehenden Ansprüche, wobei die leitende Matte (10) bis in eine Tiefe von maximal 5,0 mm unterhalb einer Oberfläche des Rotorblatts (2) eingebettet ist.

6. Enteisungsanordnung nach einem der vorhergehenden Ansprüche, wobei der Stromversorgungsanschluss (12) einen internen Anschlussteil (122, 122', 123) zum Anschließen an ein elektrisches Kabel (130, 131) auf der Innenseite des Rotorblatts (2) umfasst.

7. Enteisungsanordnung nach einem der vorhergehenden Ansprüche, wobei der Stromversorgungsanschluss (12) einen externen Anschlussteil (120) zum Anschließen des elektrisch leitenden Streifens (11) an den internen Anschlussteil (122, 122', 123) umfasst.

8. Enteisungsanordnung nach Anspruch 6 oder 7, wobei der interne Anschlussteil (122, 122', 123) einen Aluminiumkörper (122, 122', 123) umfasst.

9. Windturbine (3), die eine Anzahl Rotorblätter (2) mit einer Enteisungsanordnung (1) nach einem der Ansprüche 1 bis 8 und eine Stromversorgung (13) zum Anschließen an die Enteisungsanordnungen (1) der Rotorblätter (2) umfasst.

10. Verfahren zum Integrieren einer Enteisungsanordnung (1) in ein Windturbinenrotorblatt (2), das folgende Schritte umfasst:
- Anordnen einer elektrisch leitenden Matte (10) auf einem Rotorblattschichtaufbau (200), wobei die Matte (10) eine Anordnung aus elektrisch und thermisch leitenden Fasern und eine Anordnung aus auf die elektrisch leitenden Fasern aufgebrachten, thermisch leitenden, erhöhten Elementen umfasst, wobei die erhöhten Elemente als auf die Matte aufgebrachte Buckel ausgebildet sind, was dazu führt, dass eine Glasfaserschicht und/oder eine Harzbeschichtung über den Buckeln am dünnsten ist,
- Anordnen eines elektrisch leitenden Streifens (11) entlang eines Rands der Matte (10),
- Anordnen eines Stromversorgungsanschlusses (130, 131) in dem Rotorblattschichtaufbau (200), wobei der Stromversorgungsanschluss (130, 131) so ausgelegt ist, dass er den Streifen (11) an eine Stromversorgung (13) anschließt,
- Einbetten zumindest der elektrisch leitenden Matte (10) in den Körper des Rotorblatts (2),
- Bilden einer Druckverbindung zwischen dem leitenden Streifen (11) und der leitenden Matte (10).

11. Verfahren nach Anspruch 10, das das Bilden einer Druckverbindung an einer Vielzahl von Punkten zwischen dem leitenden Streifen (11) und der leitenden Matte (10) umfasst.

12. Verfahren nach Anspruch 11, das das Anordnen eines Gegenstücks (111) zu dem elektrisch leitenden Streifen (11) zwecks Aufnehmen einer Anzahl Befestigungselemente (110) umfasst, die die Druckverbindung zwischen dem leitenden Streifen (11) und der leitenden Matte (10) bilden.

## Revendications

1. Agencement de dégivrage (1) de pale de rotor d'éolienne (2), lequel agencement de dégivrage (1) comprend :
- un mat électroconducteur (10) ;
- une bande électroconductrice (11) destinée à distribuer un courant électrique le long d'un premier bord du mat (10) ;
- un connecteur d'alimentation en courant (12) destiné à connecter la bande (11) à une alimentation en courant (13) ;
dans lequel au moins le mat électroconducteur (10) est intégré dans le corps de la pale de rotor (2) ;
et dans lequel l'agencement de dégivrage (1) comprend un raccord à pression formé entre la bande conductrice (11) et le mat conducteur (10) ;
et est **caractérisé en ce que** :
le mat (10) comprend un agencement de fibres électroconductrices et thermoconductrices, et un agencement d'éléments thermoconducteurs surélevés, appliqués sur les fibres électroconductrices, lesdits éléments surélevés se présentent sous la forme de bosses appliquées sur le mat, au-dessus desquelles une quelconque couche de fibre de verre et/ou un quelconque revêtement en résine est la ou le plus mince.

2. Agencement de dégivrage selon la revendication 1, dans lequel la bande électroconductrice (11) et le connecteur d'alimentation en courant (12) sont au moins partiellement intégrés dans le matériau de la pale de rotor (2).

3. Agencement de dégivrage selon la revendication 1 ou la revendication 2, dans lequel le mat conducteur (10) est disposé des deux côtés d'un bord d'attaque (20) de la pale de rotor (2).

4. Agencement de dégivrage selon l'une quelconque des revendications précédentes, dans lequel le mat conducteur (10) s'étend sur au moins 90 % de la longueur de la pale de rotor (2).

5. Agencement de dégivrage selon l'une quelconque des revendications précédentes, dans lequel le mat conducteur (10) est intégré à une profondeur de 5,0 mm au plus, au-dessous d'une surface extérieure de la pale de rotor (2).

6. Agencement de dégivrage selon l'une quelconque des revendications précédentes, dans lequel le connecteur d'alimentation en courant (12) comprend une partie connecteur intérieure (122, 122', 123) destinée à être connectée à un fil de sortie (130, 131) à l'intérieur de la pale de rotor (2).

7. Agencement de dégivrage selon l'une quelconque des revendications précédentes, dans lequel le connecteur d'alimentation en courant (12) comprend une partie connecteur extérieure (120) destinée à connecter la bande électroconductrice (11) à la partie connecteur intérieure (122, 122', 123).

8. Agencement de dégivrage selon la revendication 6 ou la revendication 7, dans lequel la partie connecteur intérieure (122, 122', 123) comprend un corps en aluminium (122, 122', 123).

9. Éolienne (3) comprenant un certain nombre de pales de rotor (2) dotées d'un agencement de dégivrage (1) selon l'une quelconque des revendications 1 à 8, et une alimentation en courant (13) destinée à être connectée aux agencements de dégivrage (1) des pales de rotor (2).

10. Procédé d'incorporation d'un agencement de dégivrage (1) dans une pale de rotor d'éolienne (2), lequel procédé comprend les étapes consistant à :
- disposer un mat électroconducteur (10) sur un empilage formant pale de rotor (200), lequel mat (10) comprend un agencement de fibres électroconductrices et thermoconductrices, et un agencement d'éléments thermoconducteurs surélevés, appliqués sur les fibres électroconductrices, lesdits éléments surélevés se présentant sous la forme de bosses appliquées sur le mat, d'où il résulte qu'une quelconque couche de fibre de verre et/ou un quelconque revêtement en résine est le ou la plus mince au-dessus desdites bosses,
- disposer une bande électroconductrice (11) le long d'un bord du mat (10) ;
- disposer un connecteur d'alimentation en courant (130, 131) à l'intérieur de l'empilage formant pale de rotor (200), lequel connecteur d'alimentation en courant (130, 131) est conçu pour connecter la bande (11) à une alimentation en courant (13) ;
- intégrer au moins le mat électroconducteur (10) dans le corps de la pale de rotor (2) ;
- former un raccord à pression entre la bande conductrice (11) et le mat conducteur (10).

11. Procédé selon la revendication 10, comprenant l'étape consistant à former un raccord à pression en une pluralité de points entre la bande conductrice (11) et le mat conducteur (10).

12. Procédé selon la revendication 11, comprenant l'étape consistant à disposer une partie homologue (111) à la bande électroconductrice (11) pour accueillir un certain nombre d'attaches (110) formant le raccord à pression entre la bande conductrice (11) et le mat conducteur (10).
